# EUROPEAN PATENT SPECIFICATION

(11) **EP 1 688 374 B1**
(45) Date of publication and mention of the grant of the patent: **07.05.2008**
(21) Application number: 06380012.2
(22) Date of filing: 13.01.2006
(51) Int. Cl.: B65G 23/06

(54) **Driving crown for chain conveyors**
Kettentriebrad für Gliederförderbänder
Roue d'engrenage pour transporteurs à chaîne

(30) Priority: 02.02.2005 ES 200500191
(43) Date of publication of application: 09.08.2006
(73) Proprietor: Afher Eurobelt, S.A., 47012 Valladolid (ES)
(72) Inventor: San Miguel Nunez, Javier, 47012 Valladolid (ES); San Miguel Nunez, Marta, 47012 Valladolid (ES)
(74) Representative: Temino Ceniceros, Ignacio

(56) References cited:
- EP-A- 1 219 550
- WO-A-00/64788
- US-A- 4 865 183
- US-E- R E30 341

## Description

### OBJECT OF THE INVENTION

This invention is a driving crown, of the kind that is used for moving chain conveyors, to be specific the chains of the type that are structured in the form of a series of links, which are attached to each other by joints, and that are driven by a series of cogged crowns.

The function of the above-mentioned crowns is not only to drive the chain conveyor, but also to stop it from moving sideways.

The object of the invention is to equip that driving crown with certain means for providing the chain conveyor with transversal stabilisation, which will make it possible to considerably improve the way in which the whole assembly is cleaned.

### BACKGROUND TO THE INVENTION

It is extremely common practice to use chain conveyors that are equipped with plastic links, and there are a host of devices of this type.

One of the most common examples of such practice is the one where each link, whether a single piece or modular, contains a flat nucleus, from the lengthways edges of which run single-piece protrusions that are arranged in a trefoil formation on one or other edge, which give the link a double comb-like appearance, and these protrusions have holes drilled in them so that the joining shafts between the links can pass through them.

The chain is driven by cogged crowns, which at times are equipped with alveoli that receive a central rib running lengthways that is on the inner face of the links, whereas in another example the core is not provided with that rib and the driving crowns are equipped with cogs instead of alveoli, which act upon the link protrusions themselves.

Furthermore, at the coupling point between the chain and the driving crowns, it is necessary to provide systems that prevent any possibility of the former tending to move sideways, for the purpose of which it is necessary to adopt a system similar to the one that can be seen in European Patent EP 0 380 203, which belongs to the first group of those that have been referred to above, that is to say it is necessary for the driving crowns to be equipped with alveoli that receive a central rib running lengthways that is on the inner face of the links, in which another cog is set on either side of each alveolus, the purpose of which is to house adjacent links between adjacent links, thereby achieving the desired retaining effect. The problems arising with this solution are twofold, on the one hand the chain becomes much more expensive, because of the amount of material that is needed to obtain the aforementioned lengthways rib and, on the other hand, its special " anatomy" makes it extremely easy for dirt to build up on it, thereby making the cleaning process more difficult.

This problem gets worse when the chain conveyor is given over to driving products that generate greasy deposits, which pass through the links of the chain itself, these then being deposited on the outside of the driving crowns, and because of the way that these deposits gradually dry up, as well as because of the build up of dust, they form a pasty and very thick mass, which has a negative effect on the way that the transmission process works.

Another solution is the one that is shown in European patent EP 1 219 550, in which the driving crowns are equipped with cogs for driving the chain, in which case each cog is split into two separate cogs, which are staggered both axially and in an angular way, in such a way that this staggering effect causes an axial dovetailed joint between the crowns and the chain, which prevents the chain conveyor from moving sideways with respect to the crowns, thereby guaranteeing that the former moves in a perfectly linear way. The basic problem with this solution is that there is only a very small surface area of contact between the cogs on the crown and the links on the chain, so the transferring of stress takes place in a way that is far from ideal, and there is a high risk of the chain slipping with respect to the position of the crowns.

### DESCRIPTION OF THE INVENTION

The main characteristics of the driving crown that is the subject of the invention, which can belong to either of the two types referred to above, that is to say those which have alveoli that receive a central rib running lengthways on the inner surface of the links, or the other ones where the core is not equipped with that rib and the cogs on the driving crown act directly upon the protrusions sticking out from the links, are embodied by the fact that each cog in the crown, equipped to act simultaneously on at least two protrusions of each link in the chain, is also equipped with a crest, which is located on the back surface, which is consistent with the driving direction of the crown itself, suitably laid out and designed to stick into the aforementioned protrusions on the chain, serving as a retention device to hold back the chain axially, in view of the fact that it holds back the links transversally or axially.

This rear position of the guiding crest causes each cog on the crown to act upon the links of the chain throughout an extensive surface area, which guarantees that the stresses are transmitted in the very best way and makes sure that the typical problem of sliding between the two elements cannot occur.

The aforementioned crest is located off-centre with respect to the plane of the cog running perpendicular to the centreline of the crown, in such a way that when it also lies on the front surface of the cog, it goes into the hole that is left by the two protrusions from the link on the chain immediately after it.

This crest completely affects the radial elevation of the surface of the cog concerned, and runs as far as the body of the crown, that is to say as far as the bottom of the gap that is defined between cogs, and with a rhomboidal line the layout is of an isosceles trapezoidal nature, with concave oblique sides, there being total continuity with the marginal zones of the respective surface of the cog, without there being any sharp edges, in such a way that these concave surfaces perfectly remove the residue that builds up on the crown when a jet of water is applied to this zone or when any kind of cleaning activity is performed on it.

By way of a supplement to the structure described above, the part of the crest that is close to its open vertex is considerably lowered, there being a marked convergence towards that vertex, to enable it to go more easily between the protrusions on the link to which it has to be attached.

Optionally, the aforementioned crest can be suitably designed so that not only does it serve to stabilise the links against the tendency of the chain to move sideways, but it also serves as a pushing device, acting on the link and also helping the cog itself to drive the link.

It is clearly the case that this possibility is only practical when the crest lies on the front surface of the cog, but it is also clearly applicable not only when the cogs on the crown act directly on the protrusions on the links, but also when those cogs are equipped with an alveolus that acts upon an intermediate rib forming part of the links.

### DESCRIPTION OF THE DRAWINGS

With a view to helping to give a better understanding of the characteristics of the invention, in accordance with an example of a preferred embodiment of a practical realisation thereof, the description that is being given is supplemented with a set of drawings that are enclosed and which form an essential part of that description, by way of illustrating it but not in an exhaustive way, the following figures being included:
Figure 1.- This shows a partial view in perspective of a driving crown for chain conveyors realised in a way that is in keeping with the purpose of the invention, in accordance with a first practical realisation in which the cogs on the crown act directly upon the protrusions on the links forming the chain.
Figure 2.- This shows a profile of a link on the chain adapted to the driving crown that is shown in Figure 1.

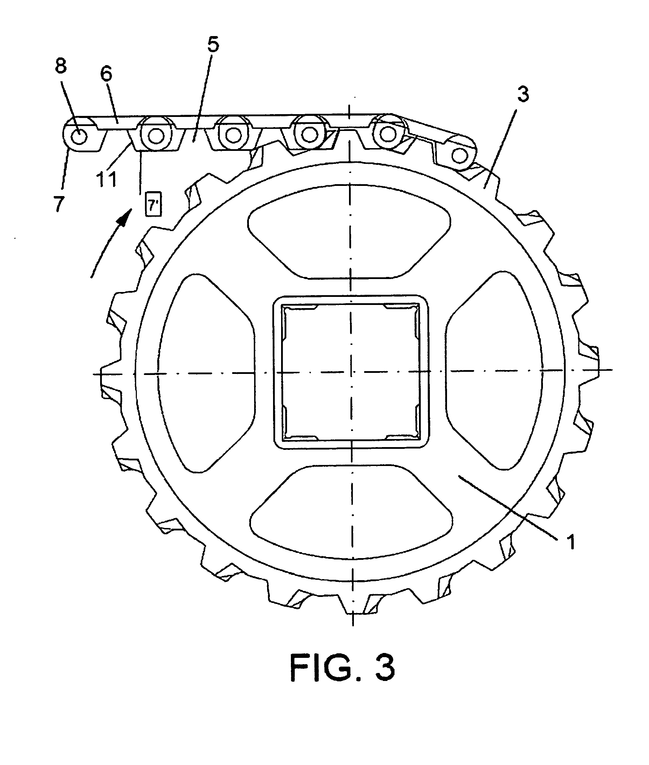

Figure 3.- This shows an axial view of the complete crown, on which the supplementary chain appears partially coupled.

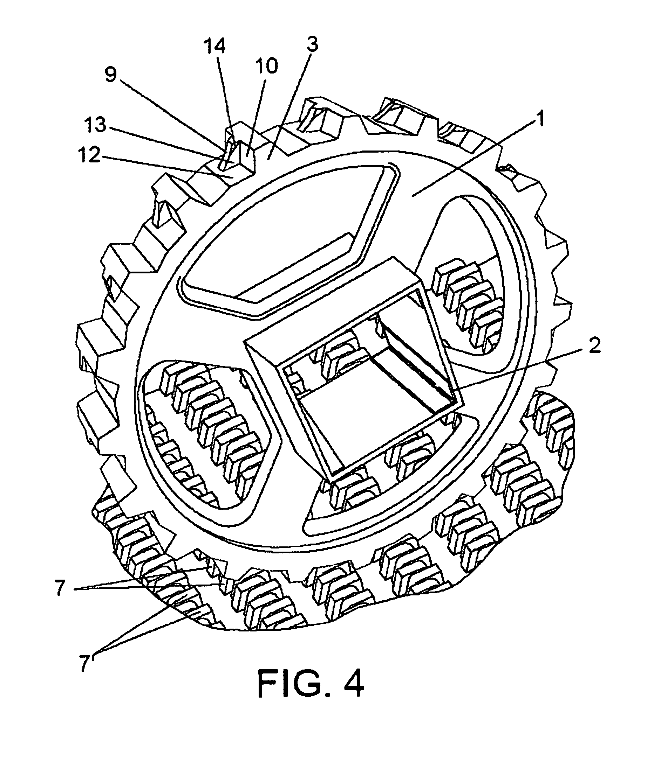

Figure 4.- Finally, this shows a view in perspective, of the whole assembly that is shown in the preceding figure.

### REALISATION OF A PREFERRED EMBODIMENT OF THE INVENTION

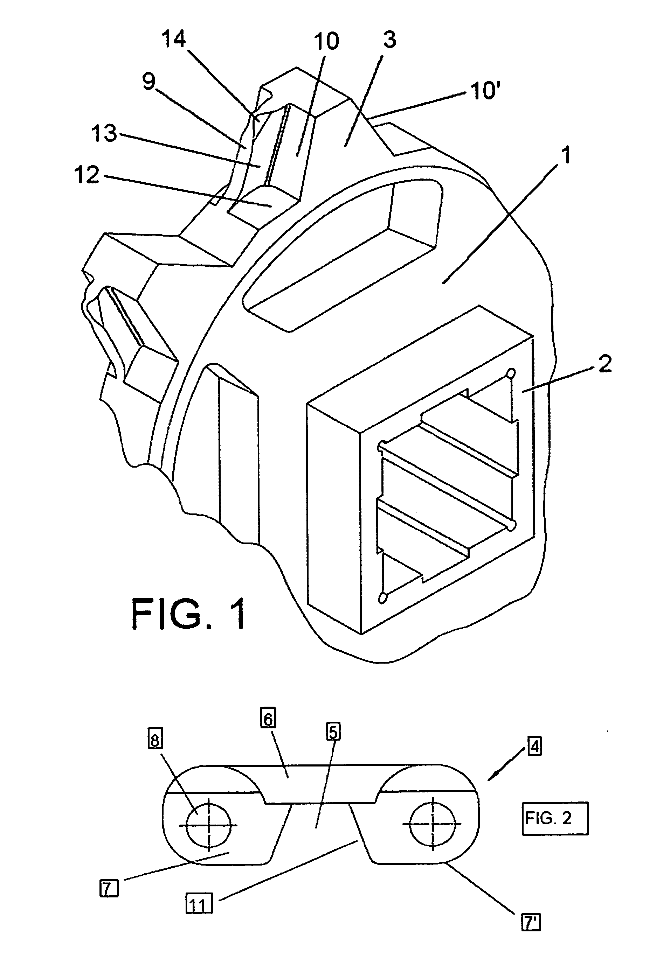

It can be seen from the figures shown above, especially from Figure 1, how the driving crown for chain conveyors that the invention proposes is made up of a body (1), with the classical tubular core (2) for coupling the driving shaft, around which there are a number of cogs (3), whose purpose is to act upon the links (4), as is shown in Figure 2. A chain conveyor is made up of a series of links.

As is also conventional, the cogs (3) are designed to fit into the gap (5) created in the heart of each link (4), between the core (6) of the link and its lateral protrusions (7 and 7'), with the holes (8) to enable the joining shafts between the links to pass through them.

Therefore, in accordance with the invention, the crown (1) is equipped with a crest (9), matching each one of its cogs (3), this crest (9) being off-centre with respect to its plane perpendicular to the centreline of the crown (1), this crest (9) being located on one of the lateral surfaces, in this particular case on the rear surface (10).

The front face (10') of the cog (3) is designed to exert pressure upon the surface (11) of two adjacent protrusions (7') on the links (4) that form part of each chain, whereas the crest (9) on its rear surface is inserted between the protrusions (7) on the same link (4).

The layout of the crest (9), which with a rhomboidal shape runs between the surface (10) of the cog and the bottom (12) of the gap that is defined between cogs, is isosceles and trapezoidal in nature, with lateral and sloping surfaces (13) whose curves are concave, in such a way that the aforementioned crest joins up with the surface (10) of the cog with no sharp edges, establishing sloping planes and curves that make it easy to get rid of the dirt during cleaning operations, as has already been pointed out.

Furthermore, the part of the crest (9) that is close to its open vertex (14), is considerably narrowed, by means of oblique lateral planes, in such a way that this narrowing makes it easy for the cog to be inserted between the protrusions (7) on the links (4).

As has already been pointed out, it is thus possible to ensure that the chain conveyor is guided only behind the cogs on the driving chains, by contrast with what usually happens, that is to say, that generally the guiding takes place both in front of and behind them, and the fact that it only happens behind allows for better support for the front surface (10') of each cog on the links forming the chain, leading to a better transmission of stresses and, as a result, improved functionality and a longer useful working life for the whole assembly.

## Claims

1. ^{st}.- Driving crown for chain conveyors, of the type that contains a series of cogs (3) whose purpose is to act directly on the protrusions (7 and 7') on the links (4) of the chain, **characterised by** the fact that each cog (3) is provided exclusively on its rear wall (10), depending on the way in which the chain is driven, with a crest (9) that is off-centre with respect to the imaginary plane of the cog (3) running perpendicular to the centreline of the crown, in such a way that the aforementioned crest (9) is housed between two adjacent protrusions (7) coming out of the link (4), rendering the gear system transversally immobile with respect to the chain conveyor, whereas its front wall (10') can operate on the surface (11) of the two adjacent protrusions (7') on the same link.

2. ^{nd}.- Driving crown for chain conveyors, as in the 1^{st} claim, **characterised by** the fact that the aforementioned crest (9), rhomboidal in shape, is extended so that it affects the entire height of the surface (10) of the cog (3), until it reaches the bottom (12) of the gap between the cogs.

3. ^{rd}.- Driving crown for chain conveyors, as in the previous claims, **characterised by** the fact that the layout plan of the crest (9) is trapezoidal and isosceles, whose lateral surfaces diverge towards the cog (3), the lateral surfaces (13) of the crest (9) being concave, in such a way that the crest (9) is joined in a rounded way to the marginal zones (10) of the cog (3), so there are no sharp edges.

4. ^{th}.- Driving crown for chain conveyors, as in the previous claims, **characterised by** the fact that the zone lying close to the open vertex (14) of the crest (9) becomes narrower as it runs towards the vertex, to make it easier for it to be inserted into the protrusions (7) on the links (4).

## Patentansprüche

1. - Antriebskranz für Kettenförder entsprechend der Art, die eine Reihe von Zähnen (3) enthalten, die den Zweck haben, direkt auf die Vorsprünge (7 und 7') an den Gliedern (4) der Kette einzuwirken, der sich **dadurch kennzeichnet, dass** jeder Zahn (3) ausschließlich auf seiner Rückseite (10) in Abhängigkeit von der Antriebslaufrichtung der Kette mit einem Kamm (9) versehen ist, der bezüglich der gedachten Ebene des Zahns (3) außermittig ist und senkrecht zur Mittellinie des Kranzes verläuft, so dass der erwähnte Kamm (9) zwischen zwei angrenzenden Vorsprüngen (7) liegt, die aus dem Kettenglied (4) heraustreten und das Übersetzungssystem bezüglich dem Kettenförderer transversal unbeweglich macht, wobei seine Vorderseite (10') auf die Fläche (11) der beiden angrenzenden Vorsprünge (7') am gleichen Kettenglied wirken kann.

2. - Antriebskranz für Kettenförderer wie im 1. Patentanspruch, der sich **dadurch kennzeichnet, dass** der oben erwähnte rautenförmige Kamm (9) sich so weit erstreckt, dass er auf die ganze Höhe der Fläche (10) des Zahns (3) einwirkt, bis er den Grund (12) des Spalts zwischen den Zähnen erreicht.

3. - Antriebskranz für Kettenförderer wie in den vorigen Patentansprüchen, der sich **dadurch kennzeichnet, dass** der Kamm (9) trapezförmig und gleichschenklig angelegt ist, dessen Seitenflächen zum Zahn (3) hin auseinanderlaufen, wobei die Seitenflächen (13) des Kamms (9) konkav sind, so dass der Kamm (9) in abgerundeter Weise an den Randzonen (10) des Zahns anliegt und es damit keine scharfen Kanten gibt.

4. - Antriebskranz für Kettenförderer wie in den vorigen Patentansprüchen, der sich **dadurch kennzeichnet, dass** der nahe dem offenen Scheitelpunkt (14) des Kamms (9) liegende Bereich schmäler wird, soweit er auf den Scheitelpunkt zuläuft, um seine Einfügung in die Vorsprünge (7) an den Kettengliedern (4) zu vereinfachen.

## Revendications

1. Couronne d'entraînement pour transporteurs à chaîne, du type qui contient une série de dents (3) dont le but est d'agir directement sur les saillies (7 et 7') des maillons (4) de la chaîne, **caractérisée par le fait qu'**elle est munie de dents (3) exclusivement sur sa paroi arrière (10), en fonction de la manière dont la chaîne est entraînée, avec une crête (9) qui est décentrée par rapport au plan imaginaire de la dent (3) qui travaille perpendiculairement à la ligne centrale de la couronne, de telle manière que la susdite crête (9) est logée entre deux saillies adjacentes (7) qui dépassent du maillon (4), faisant que le système d'engrenage est immobile à la transversale par rapport au transporteur à chaîne, tandis que sa paroi avant (10') peut travailler sur la surface (11) de deux saillies adjacentes (7') sur le même maillon.

2. Couronne d'entraînement pour transporteurs à chaîne comme dans la revendication 1, **caractérisée par le fait que** la susdite crête (9), de forme rhomboïde, est prolongée de manière à influencer toute la hauteur de la surface (10) de la dent (3) jusqu'à ce qu'elle atteigne le bas (12) de l'espace entre les dents.

3. Couronne d'entraînement pour transporteurs à chaîne comme dans les revendications précédentes, **caractérisée par le fait que** le plan de disposition de la crête (9) est trapézoïdal et isocèle, dont les surfaces latérales divergent en direction de la dent (3), les surfaces latérales (13) de la crête (9) étant concaves, de telle manière que la crête (9) est unie de façon arrondie aux zones marginales (10) de la dent (3), de sorte qu'il n'y a pas de bords coupants.

4. Couronne d'entraînement pour transporteurs à chaîne comme dans les revendications précédentes, **caractérisée par le fait que** la zone se trouvant près du vertex ouvert (14) de la crête (9) devient plus étroite lorsqu'elle tourne en direction du vertex, pour rendre plus facile son insertion dans les saillies (7) des maillons (4).
